# EUROPEAN PATENT APPLICATION

(11) **EP 3 981 976 A1**
(43) Date of publication of application: **13.04.2022**
(21) Application number: 21195899.6
(22) Date of filing: 10.09.2021
(51) Int. Cl.: F02D 41/00, F02D 41/28, G01P 3/46

(54) **ENGINE SPEED AND POSITION DETECTION**

(30) Priority: 06.10.2020 US 202017063744
(71) Applicant: Deere & Company, Moline, IL 61265 (US)
(72) Inventor: JOHNSON, KEVIN J, 68163 Mannheim (DE)
(74) Representative: Lavall, Christian Henner

(57) **Abstract**

One or more techniques and/or systems are disclosed for identifying a position of an engine, such as the position of the pistons, camshaft, and/or crank shaft, during engine starting. In some implementations, a magnetic reluctance sensor can detect the reluctance from a proximate timing gear, resulting in an input voltage signal indicative of the detected reluctance. The input voltage signal can be converted to a digital voltage signal. A trigger threshold can set to identify a detection window. During the detection window, a zero-cross of the input voltage signal is detected to identify an engine position, and any other zero-crossing signals are not identified, thereby mitigating the effects of noise at the slow starting speeds.

## Description

When starting an internal combustion engine, during the time of cranking, an on-board computer is attempting to determine the position of pistons in order to provide fuel delivery at an appropriate time to start the engine, provide efficient starts, and to avoid undesirable engine operation. Some engine position sensors need to have a certain engine velocity to get an output signal for the engine controller to read a position. The circuits typically used to interface to such sensors have a fixed minimum threshold, so the sensors may wait for the engine to come up to speed in order to appropriately detect position. The magnitude of the signal developed by some sensors is proportional to engine speed, so it can be difficult for the circuitry to accommodate very-low-speed signals, such as during starting. A variable reluctance (VR) sensing system, without more, may have a definite limit as to how slow the target can move and still develop a usable signal, which may make it unsuitable for low speed detection. An alternative, but more expensive, technology is Hall effect sensors, which are true zero-rpm sensors that actively supply information even when there is no engine motion.

This Summary is provided to introduce a selection of concepts in a simplified form that are further described below in the Detailed Description. This Summary is not intended to identify key factors or essential features of the claimed subject matter, nor is it intended to be used to limit the scope of the claimed subject matter.

One or more techniques and systems are described herein for identifying a position of an engine, such as the position of the pistons, camshaft, and/or crank shaft, during engine starting. That is, during starting of the engine it may be difficult to identify proper engine position due to low signal strength and signal noise. In some implementations, the input voltage signal from a variable reluctance sensor can be filtered and detection can be enhanced using programming logic to mitigate noise and identify the engine position signal.

In one implementation of an engine speed and position sensor interface system, a sensor that outputs a voltage signal based on detected magnetic reluctance may be used to produce an input analog voltage signal. Further, a microcontroller can be electrically coupled with the sensor. The microcontroller can comprise an analog to digital converter to convert the voltage signal to a digital voltage signal. Further, the microprocessor can comprise stored controller logic, and a processor that processes the controller logic in combination with the voltage signal, resulting in an engine position determination. The controller logic executed by the processor can comprise instructions that are configured to use a peak voltage signal of the digital voltage signal to trigger an opening of a detection window. Additionally, the instructions can be configured to identify a first zero-cross of the digital voltage signal within the detection window to identify an engine position.

To the accomplishment of the foregoing and related ends, the following description and annexed drawings set forth certain illustrative aspects and implementations. These are indicative of but a few of the various ways in which one or more aspects may be employed. Other aspects, advantages and novel features of the disclosure will become apparent from the following detailed description when considered in conjunction with the annexed drawings.
FIGURES 1A and 1B are component diagrams illustrating different implementations of an example system for detecting an engine position.
FIGURE 2 is a component diagram illustrating one implementation of one or more portions of one or more systems described herein.
FIGURES 3A and 3B are graphical diagrams illustrating one or more portions of how one or more systems described herein may be implemented.
FIGURE 4 is a graphical diagram illustrating one or more portions of how one or more systems described herein may be implemented.
FIGURE 5 is a flow diagram illustrating one implementation of an example method for detecting an engine position.
FIGURES 6A and 6B are flow diagrams illustrating an example method where one or more techniques and systems described herein can be implemented.

The claimed subject matter is now described with reference to the drawings, wherein like reference numerals are generally used to refer to like elements throughout. In the following description, for purposes of explanation, numerous specific details are set forth in order to provide a thorough understanding of the claimed subject matter. It may be evident, however, that the claimed subject matter may be practiced without these specific details. In other instances, structures and devices are shown in block diagram form in order to facilitate describing the claimed subject matter.

A system can be devised that provides for detection of engine position and speed, which may be useful during startup. That is, for example, it may be beneficial to detect engine position early during starting to allow for early synchronization of fueling, to improve engine performance and life. Knowing the position of respective pistons can help the engine control unit (ECU) identify fueling synchronization, for example, providing fuel to the appropriate piston in the firing sequence. In this way, for example, starting of the engine may be achieved faster, and wear and tear on the starter and engine can be reduced.

In some implementations, engine position can be provided by detecting a position of a timing gear using a sensor that identifies the location of teeth (e.g., and absence of teeth) in a timing gear. For example, a sensor can detect the presence of teeth while the timing gear rotates and detect the gap in gear teeth where teeth are missing, which can indicate a specific engine position (e.g., first piston). In some implementations the sensor can comprise a variable reluctance (VR) sensor that detects magnetic reluctance that results from the proximity of respective teeth (e.g.., and gaps between teeth) to the sensor, and outputs a signal that is indicative of the proximity of the teeth. In this way, for example, based on predetermined knowledge of the engine's position (e.g., with respect to the compression and exhaust stroke of respective pistons, the position of the cam, and/or position of the crank) with respect to the position of the timing gear, the indication of the output signal of the VR sensor can help identify a position of the engine. In other implementations, the sensor can comprise a hall-effect sensor that is configured to detect the intensity of a magnetic field, by measuring a value of magnetic flux density created by the proximity of the teeth of the timing gear to the sensor.

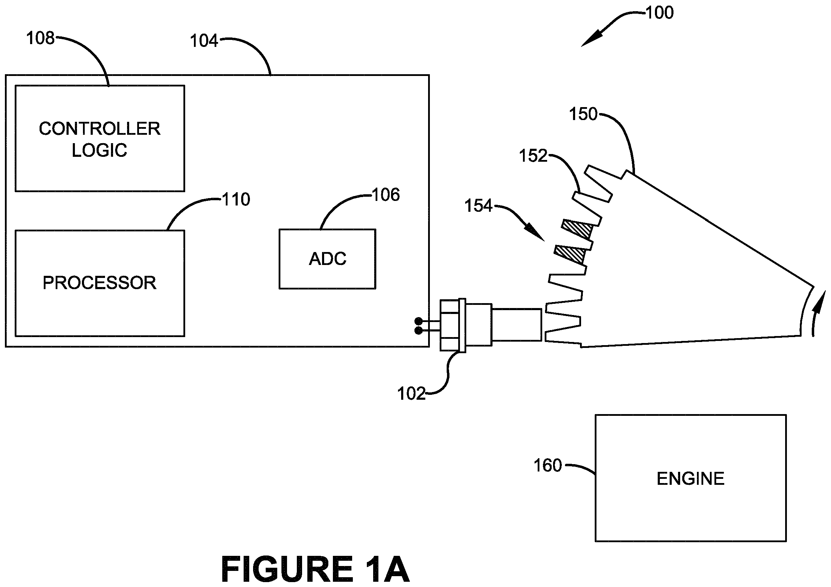

FIGURE 1A is a schematic diagram illustrating an example implementation of a system 100 for detecting a position of an engine 160. In this implementation, the example system 100 can comprise a sensor 102 that outputs a voltage signal base on detected magnetic reluctance. As an example, the sensor 102 can be configured to output a voltage signal that is indicative of the magnetic reluctance detected in association with the proximity of gear teeth 152 of a timing gear 150 to the sensing head of the sensor 102. For example, a timing gear 150 can be coupled to an operably rotating portion of the engine 160, such as the crank shaft or camshaft (e.g., or some other portion such as a timing belt, universal belt, or the like). In this way, for example, as the crank shaft or camshaft rotates, the timing gear rotates, bringing the respective teeth 152 in and out of proximity to the sensor 102.

In some implementations, the timing gear may have one or more portions with one or more missing teeth 154 (e.g., or smaller/shortened teeth). In this implementation, for example, the location of the missing teeth 154 can be indicative of a pre-determined engine position, such as the first or number one piston beginning its intake stroke at top dead center (TDC). Or some other position or cylinder during the timing cycle of the engine. In these implementations, it may be useful to know the position of the engine in the cycle in order to appropriately synchronize fueling operations in the correct sequence at startup.

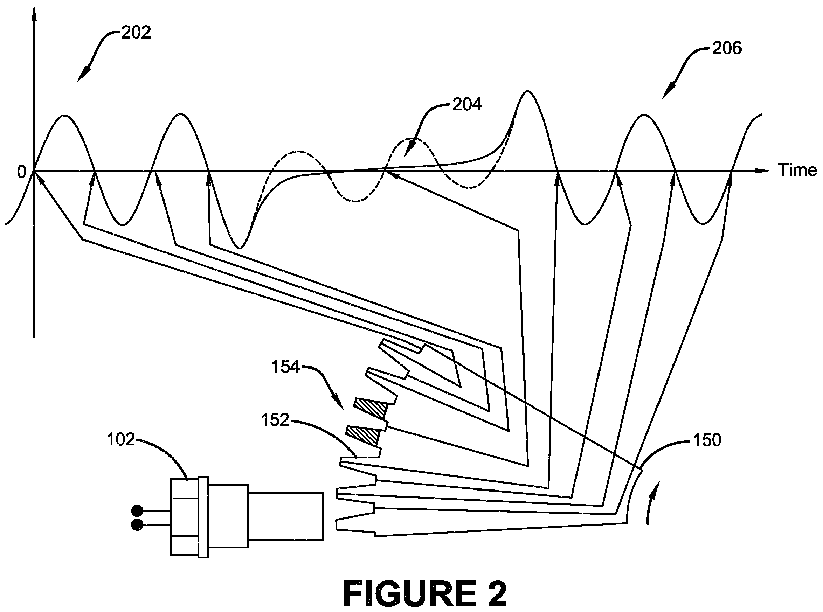

As an illustrative example, FIGURE 2 is a component diagram illustrating an example implementation of a graphed representation of the output of a sensor 102. In this example, a graph 202 illustrates the oscillations of a voltage signal output 206 by the sensor 102. That is, for example, the sensor detects magnetic reluctance between the sensor and teeth 152, and the output indicates a change in reluctance as an oscillating voltage signal 206, as the gear 150 rotates. As illustrated, as the teeth 152 move in and out of interface with the sensor 102, resulting in a change of reluctance, producing the voltage signal 206, which comprises an amplitude based at least on the speed of rotation of the gear 150. A peak is the highest positive voltage signal amplitude, which is a function of gear rotation speed. The peak is generated as the sensor polling portion is aligned with a center of the rising edge of the tooth 152, and the height can also be based on the distance between the sensor and tooth. As an example, the amplitude can be an indicator of the quality of a sensing system.

Where the signal 206 crosses the zero-voltage position it indicates the center of a target tooth 152. In this way, the system may be able to identify an engine position, for example, to synchronize the control system. Further, as illustrated, the voltage signal 206 indicates a gap 204 at the location of the missing teeth, where there is no change in reluctance. In this way, a predetermined engine position may be associated with the position of the missing tooth, which can provide for identification of engine position based at least on the voltage signal.

Returning to FIGURE 1A, the example system 100 further comprises a microcontroller 104 that is electrically coupled with the sensor 102. In this implementation, the microcontroller comprises an analog to digital converter 106 to convert the voltage signal to a digital voltage signal. The microcontroller 104 comprises stored controller logic 108, and a processor 110 that processes the controller logic 108 in combination with the voltage signal, resulting in an engine position determination. In this implementation, the controller logic 108 executed by the processor 110 comprises instructions that are configured to use a peak voltage signal of the digital voltage signal to trigger an opening of a detection window. Further, the instructions that are configured to identify a first zero-cross of the digital voltage signal within the detection window to identify an engine position.

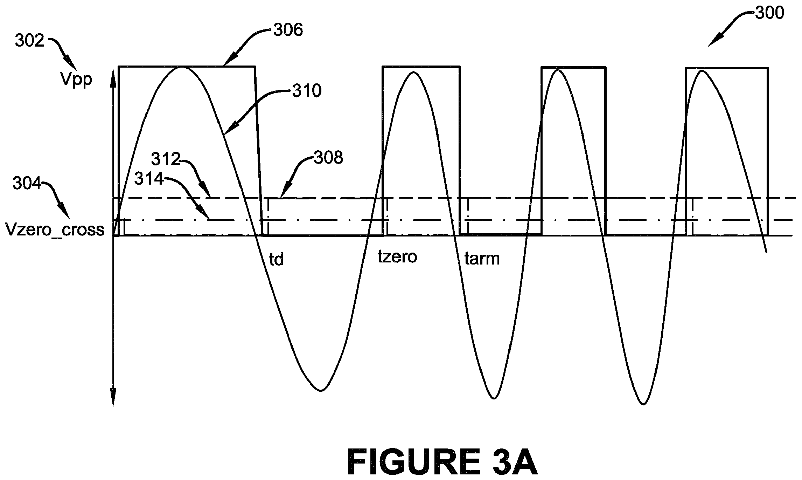

As an example, the voltage signal can be monitored and the peak of the voltage signal can be used to identify a trigger for opening the detection window. In some implementation, a percentage of the peak signal voltage can be used as a trigger threshold. For example, twenty-five percent of the peak voltage of the prior peak voltage signal may be used as a trigger to open the detection window. As an illustrative example, FIGURE 3A is a graphical illustration of a sample voltage signal output 300 during engine position detection. As illustrated, the analog voltage signal 310 can be converted into a digital voltage signal 306, such as using the analog to digital converter (e.g., 106 of FIGURE 1A). In one implementation, at initiation of the system (e.g., at start-up of an engine) the trigger 308 for the detection window can be set to a pre-determined minimum threshold 312. As the voltage signal 310 crosses above the trigger 308 the digital voltage output 306 goes to the peak voltage 302.

Further, in this example, the trigger threshold 308 is set to the zero-cross voltage 304. When the analog voltage signal 310, comprising the input signal, falls below the zero-cross voltage, the digital voltage signal 306, comprising the output signal, drops to zero voltage. At this point, the trigger threshold 308 is set to a pre-determined percentage 312 of the previous measured peak amplitude 302. That is, for example, if the prior peak voltage signal amplitude is A, the new trigger threshold 308 may be set to 0.3(A) (e.g., twenty-five percent of the amplitude). Subsequently, in this example, when the input signal 310 goes above the trigger threshold 308 (e.g., new threshold) the output signal 306 rises to the new peak amplitude 302. In this way, for example, the zero-crossing of the input signal 310 can be identified, which can be used to identify an engine position.

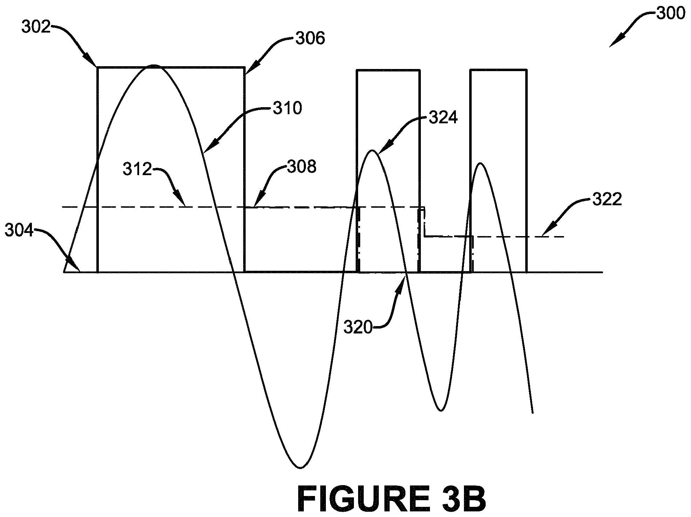

As illustrated in FIGURE 3B, as the amplitude adjusts, so can the trigger threshold. In this example, the amplitude of the input signal 310 (the analog voltage signal) is reduced, such as due to a slowing of the timing gear, and the trigger or arming threshold 308 is adjusted accordingly. For example, after the second zero-cross 320 of the input signal 310, the trigger threshold 308 is adjusted to a lower threshold 322 indicative of a percentage of the prior amplitude peak 324. Therefore, the input analog voltage signal 310 must at least reach the trigger threshold 308 in order for trigger threshold 308 to drop back to the zero-cross threshold 304, thereby opening the detection window for identifying the first zero-cross 320 of the input voltage signal 310. Further, when the input voltage signal 310 crosses the zero-cross 320 the trigger threshold rises back to the percentage of the prior amplitude.

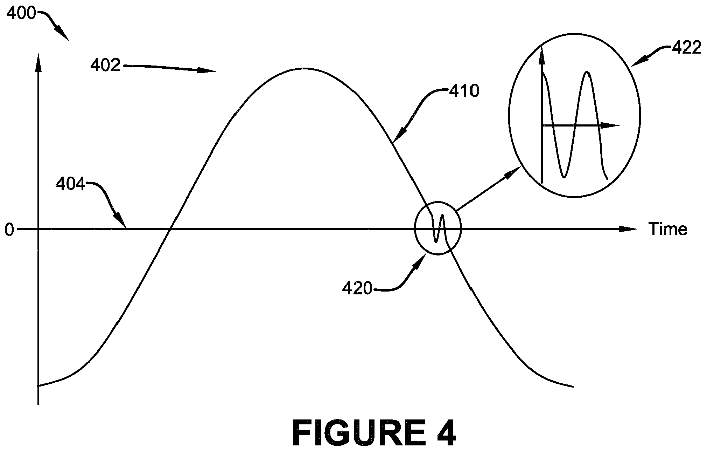

In this aspect, the example system 100 may be able to identify an engine position even at slow engine speeds, such as during start-up. For example, detection of the engine position, using the identification of gear teeth locations, can be difficult at slow speeds due to interference or noise. As an example, noise may be generated by mechanical and/or electro-mechanical forces, such as from radial, tangential, and/or lateral movement of one or more of the system components. The noise may show up as distortion in the input signal, for example, and may create an extra pulse, including an extra zero-cross during position detection. As an illustrative example, FIGURE 4 is a graphical representation 400 of a sample input analog voltage signal 410. In this example, the voltage signal 410 a peak amplitude 402 and a zero cross 420 of the zero voltage 404. However, distortion 422 or noise may provide for a second zero-cross of the zero voltage 404. In order to mitigate double triggering of the zero-cross 404, for example, merely the first zero-cross is detected during the detection window.

As described above, after the input analog voltage signal (e.g., 310 of FIGURE 3) crosses the zero-cross line 304, the detection trigger 308 is reset to the trigger threshold 322. In this way, the detection window is reset at least until the input signal 310 rises above the newly set trigger threshold 322 (e.g., 25% of the prior amplitude). For example, in this way, a second zero-cross resulting from noise or distortion, typically present at slow rotation speeds, and will not result in detection of the engine position. It should be noted that the trigger threshold is adjustable, such that a higher or lower trigger threshold may be set, as determined by a rotational speed and an amount of noise present. That is for example, the trigger threshold needs to be able to account for the rising voltage at a slow speed, but not be so low that unintentionally captures noise as a trigger to open the detection window.

In some implementations, the controller logic executed by the processor can comprise instructions that are further configured to apply a low pass frequency filter to the voltage signal to filter out portions of the voltage signal above a predetermined frequency threshold. For example, a software-based or hardware-based frequency filter can be applied to merely monitor a sine wave that is less than a pre-determine frequency, such as 30 hertz, which is typical when first starting an engine. So, for example, a low pass filter can be set up to only allow frequencies below a certain amount, in order to eliminate higher frequencies that may be associated with electrical circuits, environmental conditions, etc. In some implementation, filtering the digital voltage signal can result in sharp cutoff of undesired frequencies. The filter may be dynamically adjusted according to the condition of the engine, from start-up to running, for example, and can be moved very close to where frequencies may be when starting the engine, then move the filter out when engine speeds up.

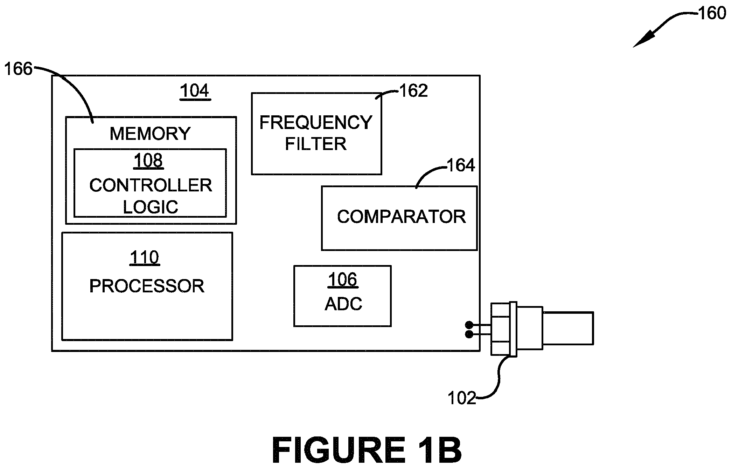

FIGURE 1B is schematic diagram illustrating an alternate implementation of at least a portion of a system for detecting an engine position, such as at slow starting speeds. In this example, the system 160 can comprise a low pass frequency filter 162. For example, the frequency filter 162 may be implemented as a hardware component, which is dynamically adjustable to filter out frequencies above a desired target level. Further, the example system 160 can comprise a comparator that is used to identify engine position when the voltage signal meets a predetermined threshold, which is indicative of an engine run mode. That is, for example, when the input analog voltage signal indicates that the engine is in run mode (e.g., instead of starting mode) the controller logic may not be needed to account for noise at low speeds. Instead, in this example, the comparator 164 can be used to identify engine position from the input voltage signal. Additionally, in this implementation, the example microcontroller 104 can comprise memory 166 used to store the controller logic 108. In some implementations, the memory 166 may be programmable, and/or updateable with new or different controller logic 108.

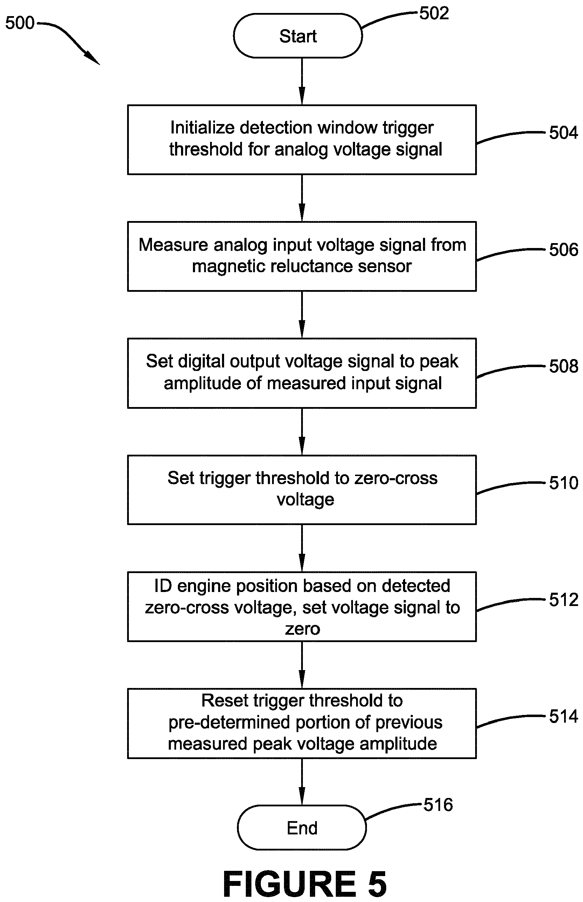

A method may be devised for detecting an engine position during engine starting. FIGURE 5 is a flow diagram illustrating an exemplary method 500 for detecting an engine position. The exemplary method 500 begins at 502. At 504, a detection window trigger threshold can be initialized for an analog voltage signal to a pre-determined starting level on a microcontroller. At 506, the microcontroller can be used to begin measuring an analog input voltage signal from a sensor that detects magnetic reluctance. At 508, a digital output voltage signal can be set to a peak amplitude of the measured input voltage signal when the input voltage signal rises above the trigger threshold. At 510, the trigger threshold can be set to a zero-cross voltage. Further, at 512, the engine position can be identified based on the detected zero-cross voltage, and the output voltage signal to zero can be set when input voltage signal falls below the zero-cross voltage. At 514, the trigger threshold can be reset to a pre-determined portion of the previous measured peak voltage amplitude.

Having reset the trigger threshold, the exemplary method 500 ends at 516.

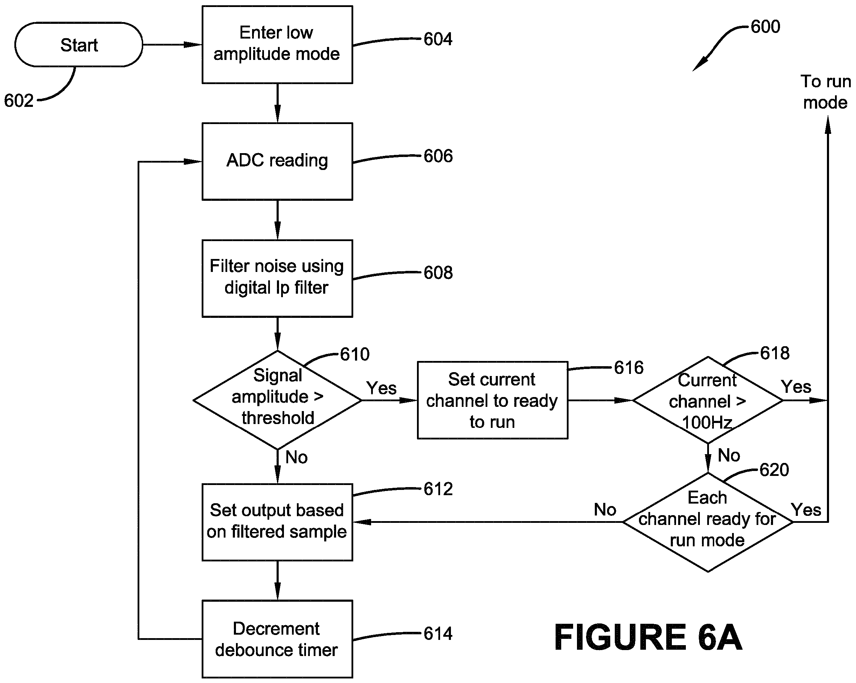

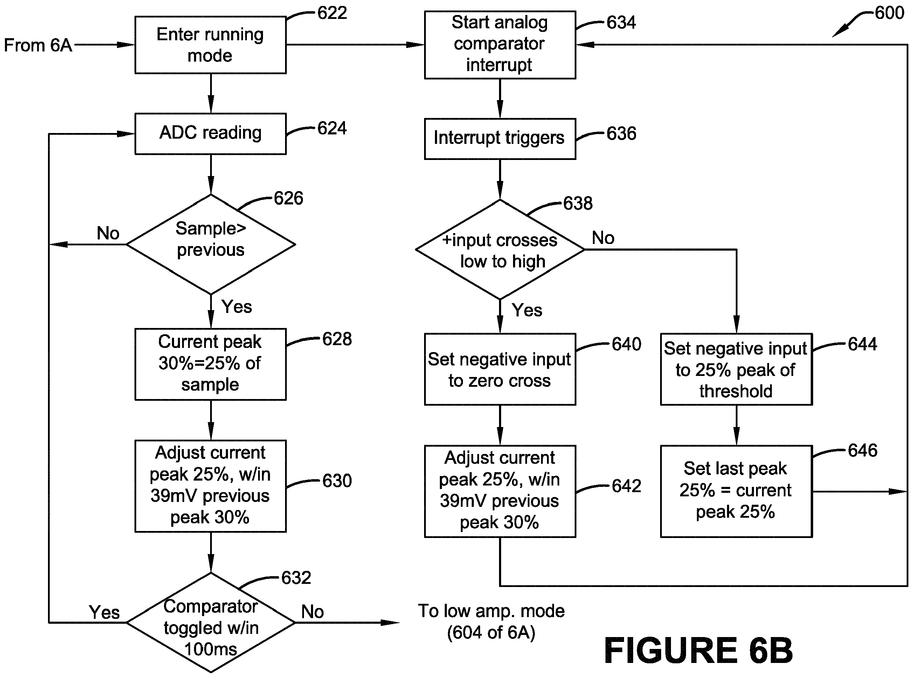

As an illustrative example, FIGURES 6A and 6B illustrate one or more portions of an example implementation of a method 600 for detecting an engine position during engine starting. In this example, at 602, the system can be powered on and the method can begin. As an example, powering on the system may initiate a microcontroller used to control/manage the system to begin monitoring engine start-up. At 604, the system can enter low amplitude mode. For example, low amplitude mode can comprise a programmatic (e.g., software-based rather than hardware-based) signal sampling cycle when the engine is not at normal run speed (e.g., start-up), and the speed of the engine is low. In this example, a resulting amplitude of an output signal (e.g., illustrated in FIGURES 2-4) may be low. At 606, an analog to digital convertor (ADC) reading is performed. That is, for example, the analog signal identified by the sensor (e.g., 102) can be converted to a digital signal (e.g., by the analog to digital converter (ADC)106) resulting in a digital signal reading.

At 608, a low pass (LP) filter can be used to filter out noise. For example, as described above, a low pass frequency filter can be applied to the digital voltage signal to filter out portions of the voltage signal above the predetermined frequency threshold. For example, a software-based or hardware-based frequency filter can be applied to merely monitor a sine wave that is less than a pre-determine frequency, such as 30 hertz, which is typical when first starting an engine. So, for example, the LP filter can merely allow frequencies below a predetermined amount, in order to eliminate noise that may be associated with higher frequencies, which may result from electrical circuits, environmental conditions, etc. In some implementations, the ADC sampling rate can comprise about 15.6 kHz, the ADC sampling rate per channel can comprise about 5.2 kHz, and the ADC resolution can comprise about 10 bits. Further, in some implementations, the LP filter cutoff in the low amplitude mode can comprise about 1.04 kHz.

At 610, the signal amplitude can be compared with a signal amplitude threshold (e.g., minimum) to determine whether the signal amplitude is greater than the threshold. For example, the single amplitude threshold can identify an amplitude that identifies engine speed sufficient for the engine hardware can take over from the software-based signal sampling cycle. If the signal amplitude does not meet the threshold, at 612, the output of the signal can be set be set based on a filtered sample of the signal. For example, the signal can be processed with a filter and hysteresis to filter out extra pulses that are not indicative of the signal's sine peak, such as engine noise, electrical noise, etc. In this example, an arming threshold can be set that is indicative of the signal's sine peak, which can be sent to the microcontroller, for example, to detect the next sine peak. That is, for example, to detect a signal that meets the arming threshold within a certain period of time; otherwise the detector is not armed.

At 614, in the example, method 600, a timer is added to improve noise rejection. That is, the signal is not detected at least until it meets the arming threshold within the time period of the timer. In this way, for example, signal noise can be eliminated from the signal detection during that period where the arming threshold is not met. The exemplary method 600 returns to 606, where another analog to digital convertor (ADC) reading is performed, as described above.

Alternately, if the signal's amplitude meets the signal amplitude threshold, at 610, the current channel is set to run mode, at 616. That is, for example, if the signals amplitude meets the threshold, the engine speed is sufficient to support a run mode for the engine, and the current channels can be set such that the hardware can take over the signal detection. As another example, the engine system can comprise a plurality of channels (e.g., cam & crank, -). In this example, the cam channel may have a lower amplitude, having fewer teeth of the gear (e.g., half speed); the crank shaft may have a higher amplitude, moving up and down based on the compression stroke. The signal amplitude threshold can be set based on desired amplitude, and the run mode can comprise one hundred hertz for example. If the current channel is greater than 100 hertz, at 618, the engine moves from low amplitude mode to run mode. Otherwise, at 620, if each channel is ready for run mode, the engine moves to run mode. If each channel is not ready for run move, at 620, the method 600 returns to 612 to set the output, and arm the threshold, as described above.

In FIGURE 6B, method 600 continues. In this implementation, run mode is entered at 622, and the analog comparator interrupt is started at 634. That is, for example, the system can switch from software-based engine speed detection to hardware-based engine speed detection, using typical systems and devices. The analog comparator detects the interrupt trigger at 636, and it is determined whether the input signal wave crosses from low to high amplitude. IF the input signal is not from low to high, the negative input value of the signal is set to twenty-five percent of the peak value of the threshold. At 646, the prior peak signal value is set to twenty-five percent, which is equal to twenty-five percent of the current peak.

Alternately, if the input signal does from low to high at 638, the negative input is set to the zero-cross value, at 640. At 642, the current peak is adjusted to 25% for the trigger for the input, to within 39 millivolts of the previous peak at thirty percent, for example.

At 624, during run mode, the analog to digital convertor (ADC) reading is performed on the input signal identified by the sensor (e.g., 102). If the sample amplitude is greater than the previous sample, at 626, the current peak arming threshold can be set to thirty percent of the current peak, which may be equivalent to about twenty-five percent of the sample amplitude. At 630, the current peak amplitude can be adjusted to twenty-five percent, within about 39 millivolts of the previous peak of thirty percent. At 632, it is determined whether the comparator has been toggled within one-hundred milliseconds. That is, for example, the system utilizing this method may determine whether the engine speed has been reduced since the last sampling. In this example, an engine shut off, bad battery, or other system failure may reduce the engine speed during start up in run mode. Further, a timer (e.g., 100 ms) can be set to determine whether the engine speed has been reduced. In this example, if the engine speed is not reduced, the example method returns to sample the signal at 624. Otherwise, the method returns the system to low amplitude mode (e.g., 604), where software based engine speed determination can occur.

In some implementations, the method can comprise applying a low pass frequency filter to the analog input voltage signal, in order to filter out frequencies that are above a predetermined threshold. Further, a gap can be identified in the reluctance provided by the analog input voltage signal that is indicative of a gap in timing gear teeth being read by the sensor. That is, for example, when the input voltage indicates no change in reluctance, this may indicate missing teeth from the timing gear, which can identify a desired engine position.

The word "exemplary" is used herein to mean serving as an example, instance or illustration. Any aspect or design described herein as "exemplary" is not necessarily to be construed as advantageous over other aspects or designs. Rather, use of the word exemplary is intended to present concepts in a concrete fashion. As used in this application, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. Further, At least one of A and B and/or the like generally means A or B or both A and B. In addition, the articles "a" and "an" as used in this application and the appended claims may generally be construed to mean "one or more" unless specified otherwise or clear from context to be directed to a singular form.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

Furthermore, at least some portions of the claimed subject matter may be implemented as a method, apparatus or article of manufacture using standard programming and/or engineering techniques to produce software, firmware, hardware or any combination thereof to control a computer to implement the disclosed subject matter. The term "article of manufacture" as used herein is intended to encompass a computer program accessible from any computer-readable device, carrier or media. Of course, those skilled in the art will recognize many modifications may be made to this configuration without departing from the scope or spirit of the claimed subject matter.

Also, although the disclosure has been shown and described with respect to one or more implementations, equivalent alterations and modifications will occur to others skilled in the art based upon a reading and understanding of this specification and the annexed drawings. The disclosure includes all such modifications and alterations and is limited only by the scope of the following claims. In particular regard to the various functions performed by the above described components (e.g., elements, resources, etc.), the terms used to describe such components are intended to correspond, unless otherwise indicated, to any component which performs the specified function of the described component (e.g., that is functionally equivalent), even though not structurally equivalent to the disclosed structure which performs the function in the herein illustrated exemplary implementations of the disclosure. In addition, while a particular feature of the disclosure may have been disclosed with respect to only one of several implementations, such feature may be combined with one or more other features of the other implementations as may be desired and advantageous for any given or particular application. Furthermore, to the extent that the terms "includes," "having," "has," "with," or variants thereof are used in either the detailed description or the claims, such terms are intended to be inclusive in a manner similar to the term "comprising."

The implementations have been described, hereinabove. It will be apparent to those skilled in the art that the above methods and apparatuses may incorporate changes and modifications without departing from the general scope of this invention. It is intended to include all such modifications and alterations in so far as they come within the scope of the appended claims or the equivalents thereof.

## Claims

1. An engine speed and position sensor interface system, the system comprising:
a sensor that outputs a voltage signal based on detected magnetic reluctance; and
a microcontroller electrically coupled with the sensor, the microcontroller comprising an analog to digital converter to convert the voltage signal to a digital voltage signal,
stored controller logic, and a processor that processes the controller logic in combination with the voltage signal, resulting in an engine position determination;
wherein the controller logic executed by the processor comprises instructions configured to:
use a peak voltage signal of the digital voltage signal to trigger an opening of a detection window; and
identify a first zero-cross of the digital voltage signal within the detection window to identify an engine position.

2. The system of claim 1, the controller logic executed by the processor comprising instructions further configured to apply a low pass frequency filter to the digital voltage signal to filter out portions of the digital voltage signal above a predetermined frequency threshold.

3. The system of any of the preceding claims, using the peak voltage signal of the digital voltage signal to trigger an opening of a detection window comprising triggering the opening of the detection window when the digital voltage signal reaches a first pre-determined triggering threshold of the immediately prior peak voltage signal.

4. The system of claim 3, the pre-determined triggering threshold comprising twenty-five-percent of the immediately prior peak voltage signal.

5. The system of claim 3, triggering the opening of the detection window comprising setting the first pre-determined triggering threshold to a second pre-determined triggering threshold comprising zero volts, wherein the controller logic executed by the processor comprising instructions further configured to reset the second pre-determined triggering threshold to a third pre-determined triggering threshold, the third pre-determined triggering threshold comprising a percentage of the immediately prior peak voltage signal

6. The system of any of claims 1-3, the sensor comprising a variable reluctance sensor.

7. The system of any of the preceding claims, the microcontroller comprising data storage comprising selectively adjustable programming indicative of the controller logic.

8. The system of any of the preceding claims, the microcontroller comprising a comparator that is used to identify engine position when the voltage signal meets a predetermined threshold, which is indicative of an engine run mode.

9. The system of claim 8, the microcontroller using the programming logic to identify the engine position when the voltage signal does not meet the predetermined threshold, which is indicative of an engine start mode.

10. The system of any of the preceding claims, the programming logic identifying a first zero-cross of the digital voltage signal within the detection window to identify an engine position comprising:
identifying when an amplitude of the voltage signal is falling;
identifying when the amplitude of the voltage signal reaches zero; and
ignoring any other zero cross signals within the detection window.

11. A method for detecting an engine position during engine starting, comprising:
initializing a detection window trigger threshold for an analog voltage signal to a pre-determined starting level on a microcontroller;
using the microcontroller to begin measuring an analog input voltage signal from a sensor that detects magnetic reluctance;
when the input voltage signal rises above the trigger threshold setting a digital output voltage signal to a peak amplitude of the measured input voltage signal;
setting the trigger threshold to a zero-cross voltage;
when input voltage signal falls below the zero-cross voltage, identify the engine position based on the detected zero-cross voltage, and set the output voltage signal to zero; and
reset the trigger threshold to a pre-determined portion of the previous measured peak voltage amplitude.

12. The method of claim 11, comprising applying a low pass frequency filter to the analog input voltage signal to filter out frequencies above a predetermined threshold.

13. The method of any of claims 11 and 12, comprising identifying a gap in the reluctance provided by the analog input voltage signal indicative of a gap in timing gear teeth being read by the sensor, the gap in the reluctance indicative of a predetermined engine position.

14. The method of any of claims 11-13, comprising using the microcontroller to convert the analog voltage signal to a digital voltage signal.

15. The method of claim 14, comprising using a peak voltage signal of the digital voltage signal to trigger the opening of the detection window comprising triggering the opening of the detection window when the digital voltage signal reaches a first pre-determined triggering threshold of the immediately prior peak voltage signal.
